# EUROPÄISCHE PATENTSCHRIFT

(11) **EP 2 693 862 B1**
(45) Veröffentlichungstag und Bekanntmachung des Hinweises auf die Patenterteilung: **01.07.2015**
(21) Anmeldenummer: 12723488.8
(22) Anmeldetag: 24.05.2012
(51) Int. Cl.: A01C 5/06

(54) **FLEXIBLE SCHEIBE FÜR SCHEIBENSÄSCHAR**
FLEXIBLE DISC FOR DISC COULTER
DISQUE FLEXIBLE POUR SEMOIR À SOC

(30) Priorität: 10.06.2011 DE 102011051026
(43) Veröffentlichungstag der Anmeldung: 12.02.2014
(73) Patentinhaber: Kverneland AS, 4355 Kvernaland (NO)
(72) Erfinder: BUDDE, Michael, 59609 Anröchte (DE)
(74) Vertreter: Becker, Thomas
(86) Internationale Anmeldenummer: PCT/EP2012/059721
(87) Internationale Veröffentlichungsnummer: WO 2012/168087

(56) Entgegenhaltungen:
- EP-A1- 0 533 246
- EP-A1- 0 579 909
- EP-A1- 1 407 652

## Beschreibung

Die Erfindung betrifft eine flexible Scheibe zur rotierbaren Aufnahme an einer Scharhalterung eines Scheibenschars gemäß Patentanspruch 1 und ein Scheibenschar mit einem zur Zuführung von Saatgut und/oder Dünger zwischen eine Schneidscheibe und eine zumindest teilweise flexible Scheibe vorgesehenen Mündungsabschnitt gemäß Patentanspruch 2.

Ein gattungsbildender Stand der Technik, der die prinzipielle Funktionsweise eines solchen Scheibenschars beschreibt, ist in der EP 0 579 909 B2 **sowie der** EP 1 407 652 A1 offenbart. **Die** EP 0 533 246 A1 **beschreibt eine Schneidscheibe mit unterschiedlichen Abständen des Umfangs zum Schaft der Schneidscheibe**.

Wie in der EP 0 579 909 B2 beschrieben besteht weiterhin ein Bedarf für eine Verbesserung der Reinigung der Schneidscheibe, so dass der vorliegenden Erfindung die Aufgabe zugrunde liegt, die als Reinigungsscheibe dienende flexible Scheibe beziehungsweise ein korrespondierendes Scheibenschar hinsichtlich deren Reinigungswirkung zu optimieren.

Hinsichtlich der flexiblen Scheibe wird die Aufgabe mit den Merkmalen des Anspruchs 1 und hinsichtlich des Scheibenschars mit den Merkmalen des Anspruchs 2 gelöst.

Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen. Bei angegebenen Wertebereichen sollen auch dazwischen liegende Werte als Grenzwerte offenbart gelten. Merkmale des Scheibenschars umfassen zumindest mittelbar auch Merkmale der flexiblen Scheibe und umgekehrt.

Der vorliegenden Erfindung liegt der Gedanke zugrunde, durch Veränderung der Form der Außenkontur der flexiblen Scheibe eine verbesserte Reinigungswirkung zu erzielen, da die wirksame Reinigungsfläche zwischen der Schneidscheibe und der flexiblen Scheibe vergrößert wird. Dabei ist insbesondere eine unterschiedliche Rotationsgeschwindigkeit der Schneidscheibe gegenüber der flexiblen Scheibe vorgesehen. Da die flexible Scheibe elastisch verformbar nachgebend ausgebildet ist, ergibt sich an der Außenkontur in der Drehebene der flexiblen Scheibe ein unterschiedlicher Anpressdruck, und zwar bedingt durch unterschiedliche Abstände der Außenkontur der flexiblen Scheibe zum Zentrum, Flächenschwerpunkt oder der Rotationsachse. Der maximale Scheitelabstand D weicht dabei nicht nur um Fertigungstoleranzen von dem minimalen Scheitelabstand d ab, mithin insbesondere um mehr als 1%, vorzugsweise mindestens um 3%, noch bevorzugter mindestens um 5%. Dabei ist es insbesondere denkbar, dass der minimale Scheitelabstand d durch eine zum Zentrum, dem Flächenschwerpunkt oder der Rotationsachse gewölbte oder konkave Form gebildet wird. Durch die erfindungsgemäße Ausgestaltung wird nicht nur eine größere wirksame Reinigungsfläche zwischen der Schneidscheibe und der flexiblen Scheibe erreicht, sondern auch ein verbesserter Abwurf etwaiger zwischen der Schneidscheibe und der flexiblen Scheibe eingeklemmter Gegenstände, beispielsweise kleine Steine.

Indem die flexible Scheibe in ihrer Drehebene eine zumindest überwiegend, insbesondere vollständig, konvexe, insbesondere ovale, vorzugsweise elliptische, Außenkontur aufweist, wird eine besonders effektive Reinigung der Schneidscheibe erreicht.

Mit Vorteil ist die flexible Scheibe gemäß einer Ausführungsform der Erfindung aus Kunststoff, insbesondere zumindest überwiegend aus einem Thermoplast, vorzugsweise zumindest überwiegend aus einem thermoplastischen Elastomer, gebildet. Diese Werkstoffe erweisen sich einerseits als sehr widerstandsfähig und andererseits für die zu erzielende Reinigungswirkung als sehr vorteilhaft.

Besonders homogen wird die Reinigungswirkung, indem die flexible Scheibe eine symmetrische Außenkontur aufweist.

In einer weiteren, vorteilhaften Ausführungsform der Erfindung ist vorgesehen, dass die flexible Scheibe eine gewölbte, insbesondere zur Reinigungsfläche hin konkave, Beaufschlagungsfläche zur Beaufschlagung der Reinigungsfläche aufweist. Auf diese Weise wird eine Vorspannung beziehungsweise Spannung zwischen der flexiblen Scheibe und der Schneidscheibe erreicht, die über einen langen Zeitraum konstant gehalten wird. Um eine entlang der Beauschlagungsfläche bei Rotation der flexiblen Scheibe gleichmäßige, insbesondere weitgehend konstante, Beaufschlagungskraft zu bewirken, kann die Beaufschlagungsfläche uneben ausgebildet sein. Besonders vorteilhaft ist es, wenn die unebene Beaufschlagungsfläche durch unterschiedliche Dicke parallel zur Rotationsachse und/oder durch entsprechende Ausformung der Beaufschlagungsfläche gebildet wird. Dabei steht die Beaufschlagungsfläche vorteilhafterweise im Bereich von minimalen Scheitelabständen d in Richtung der Reinigungsfläche beziehungsweise entgegen der Wölbung der flexiblen Scheibe vor.

Eine solche flexible Scheibe ist insbesondere in vorteilhafter Weise durch Thermoformen oder Spritzgießen herstellbar.

Soweit die flexible Scheibe durch Ausstanzen aus einem bahnenförmigen Material herstellbar ist, ergibt sich eine besonders kostengünstige und präzise Fertigung.

Gemäß einer weiteren vorteilhaften Ausführungsform der Erfindung ist vorgesehen, dass die flexible Scheibe und/oder die Schneidscheibe zumindest an ihrer Beaufschlagungsfläche/Reinigungsfläche mit haftreduzierenden Partikeln, insbesondere einem Füllstoff mit wasser- und/oder partikelabweisenden Eigenschaften, vorzugsweise einem Nanofüllstoff, versehen ist/sind. Auf diese Weise können Anhaftungen von Partikeln, insbesondere Ackerboden, auf ein Minimum reduziert werden. Als Nanofüllstoff kommt beispielsweise Siliziumdioxid in Frage.

Alternativ oder zusätzlich hierzu kann gemäß einer vorteilhaften Ausführungsform der Erfindung vorgesehen sein, die flexible Scheibe und/oder die Schneidscheibe zumindest an ihrer Beaufschlagungsfläche/Reinigungsfläche mikrostrukturiert auszubilden. Durch entsprechende Strukturierung kann die Anhaftung von Wasser und/oder Partikeln weiter reduziert werden. Die Mikrostrukturierung wird entweder durch Abformung in einem Spritzgießwerkzeug bei einem Spritzgießprozess geschaffen oder durch einen Prägeprozess der sich der dem Spritzgießprozess und gegebenenfalls einem Thermoformprozess anschließen kann. Eine Beschichtung ist ebenfalls denkbar, insbesondere bei der Schneidscheibe, die aus Metall gebildet sein kann. Als Beschichtung kommt Lack, insbesondere Nanopartikel aufweisender Lack, in Frage.

Als Spritzgießsonderverfahren kann das so genannte Sandwichverfahren zum Einsatz kommen. Dabei wird ein innerer Kern der flexiblen Scheibe aus einem ersten thermoplastischen Werkstoff mit einem zweiten thermoplastischen Werkstoff umspritzt, der die Hülle und somit die gesamte Außenkontur der flexiblen Scheibe nicht nur in der Drehebene, sondern auch an den Oberflächen der flexiblen Scheibe bildet.

Beide Werkstoffe können entweder aus derselben Werkstoffgruppe oder aus unterschiedlichen Werkstoffgruppen bestehen. Bei der Wahl gleicher Werkstoffgruppen ist es insbesondere denkbar, als Kernmaterial einen rezyklierten, kostengünstigeren Werkstoff und als Außenhülle an der Außenkontur, insbesondere denselben, Werkstoff als Neuware einzusetzen. Als weitere Kombinationen sind denkbar die Kombination aus einem preisgünstigen Werkstoff für das Kernmaterial, welches dann die Funktion eines Füllmaterials übernimmt mit einem hochpreisigen, insbesondere anderen, Werkstoff, der als technischer Werkstoff die eigentliche Funktion der flexiblen Scheibe erfüllt oder Werkstoffpaarungen, die die zum Teil gegenläufigen Eigenschaften höhere Festigkeit (erster Werkstoff) und höhere Flexibilität (zweiter Werkstoff) erfüllen. Beide Werkstoffe können hinsichtlich ihrer chemischen Zusammensetzung eine Haftung nach dem Fertigungsprozess eingehen. Da der zweite Werkstoff den ersten umhüllt, ist es häufig ausreichend, wenn durch geometrische Vorkehrungen eine rein mechanische Haftung durch Verkrallung bewirkt werden kann.

Gemäß einer alternativen Ausführungsform der Erfindung ist es denkbar, die flexible Scheibe aus einem durch Spritzgießverfahren mittels Umspritzen des Umfangs einer Stahlscheibe mit einem thermoplastischen Material herzustellen. Dieses Material kann insbesondere eine gute Haftfähigkeit zu Metall aufweisen, so dass das Umspritzen auf die Stahlscheibe ohne weitere Vorkehrungen erfolgen kann. Die Haftung erfolgt mittels eines umlaufenden Stahl-/Kunststoffverbundes, wobei sich beide Materialien in einer Breite von insbesondere 1cm bis 4cm überlappen. Soweit erfindungsgemäß auf ein thermoplastisches Material zurückgegriffen wird, welches von sich aus keinen Verbund mit einem Metall eingeht, so kann der Verbund durch sogenannte Hinterschnitte erzeugt werden. Derartige Hinterschnitte können insbesondere dadurch geschaffen werden, dass entlang des Umfangs der Stahlscheibe Bohrungen eingebracht werden. Mittels eines Spritzgießprozesses werden beide Umfangsseiten der Stahlscheibe mit dem thermoplastischen Material umspritzt, wobei das thermoplastische Material die Bohrungen durchdringt und so eine erzwungene Haftverbindung des thermoplastischen Materials mit der Stahlscheibe eingeht.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1: eine perspektivische Ansicht eines erfindungsgemäßen Scheibenschars mit einer flexiblen Scheibe in einer ersten Rotationsposition und
- Figur 2: das Scheibenschar gemäß Figur 1 mit einer flexiblen Scheibe in einer zweiten, um etwa 90° gedrehten Position.

In den Figuren sind gleiche Bauteile oder Bauteile mit der gleichen Funktion mit den gleichen Bezugszeichen gekennzeichnet.

Der grundsätzliche Aufbau einer erfindungsgemäßen Saatgut- und/oder Düngerverteilmaschine, im folgenden der Einfachheit halber als Verteilmaschine bezeichnet, die zur Aufnahme einer Reihe von erfindungsgemäßen Säscharen vorgesehen ist, ist nicht dargestellt und wird als bekannt vorausgesetzt. Die Fahrtrichtung F ist durch einen Pfeil dargestellt (in der Zeichnungsebene der Figuren nach rechts). Im Ausführungsbeispiel ist die Erfindung anhand einer pneumatischen Verteilmaschine gezeigt. Genauso ist die Erfindung auch für eine Einzelkornsämaschine anwendbar.

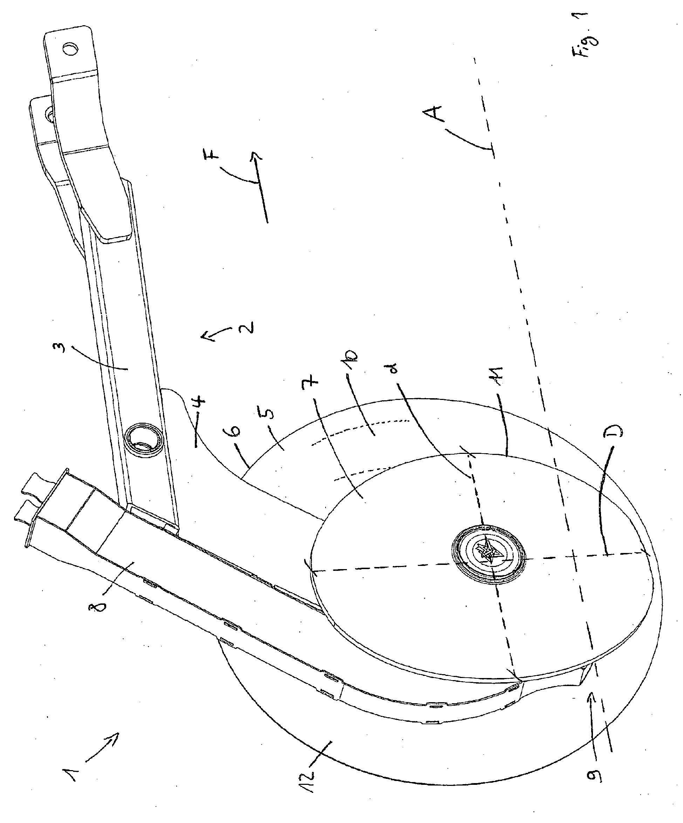

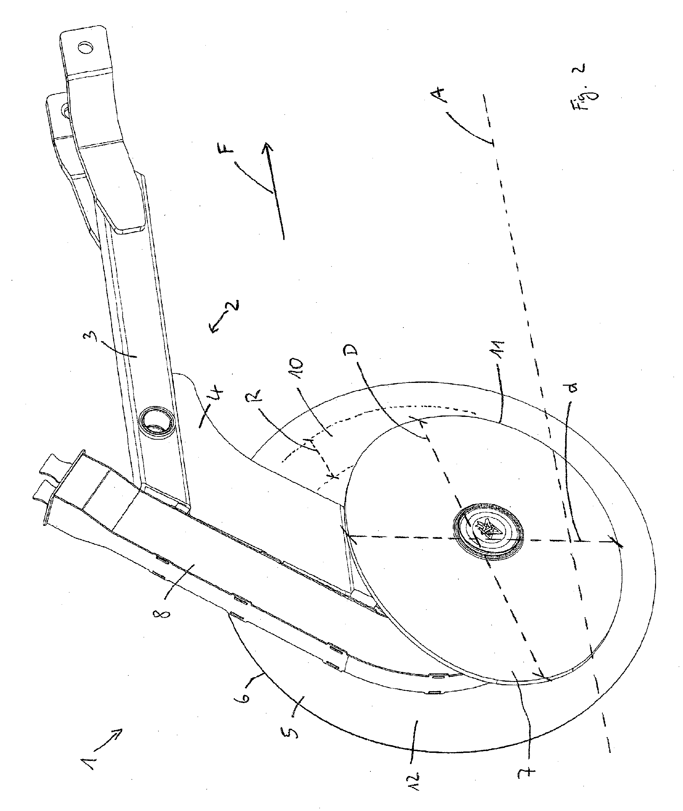

Das in den Figuren 1 und 2 dargestellte Scheibenschar 1 weist eine Scharhalterung 2 mit einer an einem Halterohr 3 angebrachten Halterung 4 und eine auf einer in den Ansichten gemäß Figuren 1 und 2 verdeckten Welle rotierbar gelagerte Schneidscheibe 5 auf. Die Schneidscheibe 5 weist eine kreisförmige Außenkontur 6 auf, die mit oder ohne Verzahnung ausgebildet sein kann.

Auf einer zweiten Welle ist eine flexible Scheibe 7 rotierbar gelagert, wobei beide Wellen an der Halterung 4 in an sich bekannter Weise winklig zueinander angeordnet sind, so dass auch die Scheiben 5, 7 entsprechend angewinkelt zueinander rotieren.

Ferner umfasst das Scheibenschar 1 eine Zuführleitung 8 für körniges Material (Saatgut/Dünger), wobei die Zuführleitung 8 in ihrem unteren Bereich in einen Mündungsabschnitt 9 des Scheibenschars 1 mündet, der zwischen der Schneidscheibe 5 und der flexiblen Scheibe 7 angeordnet ist. Die Zuführleitung 8 ist an ihrem anderen Ende an eine (nicht dargestellte) Dosiereinrichtung zur Dosierung des körnigen Materials anschließbar.

Während die Schneidscheibe 5 aus Stahl dazu dient, den Ackerboden A während der Fahrt in Fahrtrichtung F zu öffnen, dient die kleiner als die Schneidscheibe 5 ausgebildete flexible Scheibe 7 in erster Linie dem Schutz des Mündungsabschnitts 9 und der Reinigung der Schneidscheibe 5 vor etwaigem, an der Schneidscheibe 5 anhaftenden Material des Ackerbodens A beziehungsweise aus dem Ackerboden A.

Die flexible Scheibe 7 ist als thermoplastisches Elastomer durch Ausstanzen aus einer Bahn des thermoplastischen Elastomers hergestellt worden und weist eine durch einen Thermoformprozess geschaffene Wölbung auf, die gegenüber der Schneidscheibe 5 konkav ausgebildet ist. Aus diesem Grund verlaufen die in den Figuren 1 und 2 dargestellten minimalen d und maximalen D Scheitelabstände der flexiblen Scheibe 7 wegen der perspektivischen Darstellung in den Figuren 1 und 2 scheinbar nicht durch die Rotationsachse der flexiblen Scheibe 7. In einer Aufsicht würden diese durch die Rotationsachse verlaufen, die vorzugsweise mit dem Flächenschwerpunkt der flexiblen Scheibe 7 zusammenfällt.

Die flexible Scheibe 7 weist eine im vorliegenden Ausführungsbeispiel elliptische Außenkontur 11 mit dem maximalen Scheitelabstand D und dem minimalen Scheitelabstand d auf. Durch die unterschiedlichen Umfänge der Schneidscheibe 5 und der flexiblen Scheibe 7 ergibt sich eine unterschiedliche Rotationsgeschwindigkeit der Schneidscheibe 5 verglichen mit der Rotationsgeschwindigkeit der flexiblen Scheibe 7, so dass während des Betriebs, also dem Ausbringen von Saatgut/Dünger immer wieder ein anderer Umfangsabschnitt der Außenkontur 11 mit einer zur Schneidscheibe 5 weisenden Beaufschlagungsfläche eine Reinigungsseite 12 der Schneidscheibe 5 überstreicht. Durch die elliptische Form der flexiblen Scheibe 7 ergibt sich zusammen mit der winkligen Anordnung der flexiblen Scheibe 7 gegenüber der Schneidscheibe 5 eine wirksame ringförmige Reinigungsfläche 10, die verglichen mit einer runden flexiblen Scheibe aus dem Stand der Technik eine größere Ringbreite R aufweist. Die Ringbreite R wird ungefähr um die Differenz des maximalen Scheitelabstands D zum minimalen Scheitelabstand d vergrößert.

Zusätzlich ergeben sich am Umfang beziehungsweise der Außenkontur 11 der flexiblen Scheibe 7 unterschiedliche Anpressdrücke, so dass auch etwaige eingeklemmte Gegenstände leichter abgeworfen werden.

### Bezugszeichenliste

- 1: Scheibenschar
- 2: Scharhalterung
- 3: Halterohr
- 4: Halterung
- 5: Schneidscheibe
- 6: Außenkontur
- 7: flexible Scheibe
- 8: Zuführleitung
- 9: Mündungsabschnitt
- 10: Reinigungsfläche
- 11: Außenkontur
- 12: Reinigungsseite
- d: minimaler Scheitelabstand
- D: maximaler Scheitelabstand
- F: Fahrtrichtung
- A: Ackerboden
- R: Ringbreite

## Patentansprüche

1. Scheibenschar (1) mit einem zur Zuführung von Saatgut und/oder Dünger zwischen eine Schneidscheibe (5) und eine zumindest teilweise flexible Scheibe (7) vorgesehenen Mündungsabschnitt (9) mit einer Scharhalterung (2) zur rotierbaren Aufnahme der zum Öffnen eines Ackerbodens (A) dienenden Schneidscheibe (5) und der eine Reinigungsfläche (10) einer dem Mündungsabschnitt (9) zugewandten Reinigungsseite (12) der Schneidscheibe (5) überstreichenden flexiblen Scheibe (7), **dadurch gekennzeichnet, dass** die flexible Scheibe (7) in ihrer Drehebene einen maximalen Scheitelabstand (D) und einen davon abweichenden minimalen Scheitelabstand (d) aufweist.

2. Scheibenschar nach Anspruch 1, bei dem die flexible Scheibe (7) in ihrer Drehebene eine zumindest überwiegend, insbesondere vollständig, konvexe, insbesondere ovale, vorzugsweise elliptische, Außenkontur (11) aufweist.

3. Scheibenschar nach Anspruch 1 oder 2, bei dem die flexible Scheibe (7) aus Kunststoff, insbesondere zumindest überwiegend aus einem Thermoplast, vorzugsweise zumindest überwiegend aus einem thermoplastischen Elastomer, gebildet ist.

4. Scheibenschar nach einem der Ansprüche 1 bis 3, bei dem die flexible Scheibe (7) eine symmetrische Außenkontur (11) aufweist.

5. Scheibenschar nach einem der Ansprüche 1 bis 4, bei der die flexible Scheibe (7) eine gewölbte, insbesondere zur Reinigungsfläche (10) hin konkave, Beaufschlagungsfläche zur Beaufschlagung der Reinigungsfläche (10) aufweist.

6. Scheibenschar nach einem der Ansprüche 1 bis 5, bei dem die flexible Scheibe (7) zumindest teilweise, insbesondere die Beaufschlagungsfläche, durch Thermoformen oder Spritzgießverfahren, insbesondere mit unterschiedlichen Materialschichten, herstellbar ist.

7. Scheibenschar nach einem der Ansprüche 1 bis 6, bei dem die flexible Scheibe (7) durch Ausstanzen aus einem bahnenförmigen Material herstellbar ist.

8. Scheibenschar nach einem der Ansprüche 1 bis 7, bei dem die flexible Scheibe (7) und/oder die Schneidscheibe (5) zumindest an ihrer Beaufschlagungsfläche/Reinigungsfläche (10) mit haftreduzierenden Partikeln, insbesondere einem Füllstoff mit wasser- und/oder partikelabweisenden Eigenschaften, vorzugsweise einem Nanofüllstoff, versehen ist.

9. Scheibenschar nach einem der Ansprüche 1 bis 8, bei dem die flexible Scheibe (7) und/oder die Schneidscheibe (5) zumindest an ihrer Beaufschlagungsfläche/Reinigungsfläche (10) mikrostrukturiert ausgebildet ist/sind.

## Claims

1. A disc coulter (1) with an outlet section (9) which is intended for feed of seed and/or fertilizer between a cutting disc (5) and an at least partially flexible disc (7) with a coulter mount (2) for rotational accommodation of the cutting disc (5) which is used to open the soil (A) and of a flexible disc (7) which brushes over a cleaning surface (10) of a cleaning side (12) of the cutting disc (5), which side faces the outlet section (9), wherein the flexible disc (7) in its plane of rotation has a maximum apex distance (D) and a minimum apex distance (d) which differs from it.

2. The disc coulter as claimed in Claim 1, wherein the flexible disc (7) in its plane of rotation has an at least largely, especially completely convex, especially oval, preferably elliptical outer contour (11).

3. The disc coulter as claimed in Claim 1 or 2, wherein the flexible disc (7) is formed from plastic, especially at least largely from a thermoplastic, preferably at least largely from a thermoplastic elastomer.

4. The disc coulter as claimed in one of Claims 1 to 3, wherein the flexible disc (7) has a symmetrical outer contour (11).

5. The disc coulter as claimed in one of Claims 1 to 4, wherein the flexible disc (7) has a curved action surface which is concave especially toward the cleaning surface (10), for acting on the cleaning surface (10).

6. The disc coulter as claimed in one of Claims 1 to 5, wherein the flexible disc (7) can be produced at least partially, especially the action surface, by thermoforming or injection molding methods, especially with different material layers.

7. The disc coulter as claimed in one of Claims 1 to 6, wherein the flexible disc (7) can be produced by punching out of a web-shaped material.

8. The disc coulter as claimed in one of Claims 1 to 7, wherein the flexible disc (7) and/or the cutting disc (5) at least on its action surface/cleaning surface (10) is provided with adhesion-reducing particles, especially a filler with water-repellent and/or particle-repellent properties, preferably a nanofiller.

9. The disc coulter as claimed in one of Claims 1 to 8, wherein the flexible disc (7) and/or the cutting disc (5) is/are made microstructured at least on its action surface/cleaning surface (10).

## Revendications

1. Soc à disque (1) avec une section d'embouchure (9) prévue entre un disque de coupe (5) et au moins en partie un disque flexible (7) pour l'alimentation en semences et/ou engrais avec un support de soc (2) pour loger en rotation le disque de coupe (5) servant à l'ouverture d'un sol arable (A) et d'un disque flexible (7) balayant une surface de nettoyage (10) d'un côté de nettoyage (12) du disque de coupe (5) tourné vers la section d'embouchure (9), **caractérisé en ce que** le disque flexible (7) comporte dans son plan de rotation une distance au sommet maximale (D) et une distance au sommet minimale s'en écartant (d).

2. Soc à disque selon la revendication 1 pour lequel le disque flexible (7) comporte dans son plan de rotation un contour extérieur (11) au moins essentiellement, en particulier complètement, convexe, en particulier ovale, de préférence elliptique.

3. Soc à disque selon la revendications 1 ou 2 pour lequel le disque flexible (7) est constitué de matière plastique, en particulier au moins essentiellement d'un thermoplastique, de préférence au moins essentiellement d'un élastomère thermoplastique.

4. Soc à disque selon l'une quelconque des revendications 1 à 3 pour lequel le disque flexible (7) comporte un contour extérieur (11) symétrique.

5. Soc à disque selon l'une quelconque des revendications 1 à 4 pour lequel le disque flexible (7) comporte une surface d'alimentation bombée, en particulier concave vers la surface de nettoyage (10) pour alimenter la surface de nettoyage (10).

6. Soc à disque selon l'une quelconque des revendications 1 à 5 pour lequel le disque flexible (7) peut être fabriqué au moins en partie, en particulier la surface d'alimentation, par thermoformage ou procédé de moulage par injection, en particulier avec des couches de matériau différentes.

7. Soc à disque selon l'une quelconque des revendications 1 à 6 pour lequel le disque flexible (7) peut être fabriqué par matriçage à partir d'un matériau en bande.

8. Soc à disque selon l'une quelconque des revendications 1 à 7 pour lequel le disque flexible (7) et/ou le disque de coupe (5) est muni au moins sur sa surface d'alimentation/surface de nettoyage (10) de particules réduisant l'adhérence, en particulier une matière de remplissage avec des propriétés hydrophobes et/ou antiparticules, de préférence une nanomatière de remplissage.

9. Soc à disque selon l'une quelconque des revendications 1 à 8 pour lequel le disque flexible (7) et/ou le disque de coupe (5) est/sont constitué(s) sur leur surface d'alimentation/surface de nettoyage (10) de façon microstructurée.
